# FASCICULE DE BREVET EUROPEEN

(11) **EP 3 080 410 B1**
(45) Date de publication et mention de la délivrance du brevet: **13.02.2019**
(21) Numéro de dépôt: 14821804.3
(22) Date de dépôt: 08.12.2014
(51) Int. Cl.: B60H 1/04, F01M 1/16, F01M 5/00, F02D 41/02, F02D 41/06

(54) **PROCEDE DE PILOTAGE D'UNE POMPE A HUILE POUR AMELIORER UNE PRESTATION THERMIQUE DANS L'HABITACLE D'UN VEHICULE AUTOMOBILE ET CALCULATEUR MOTEUR CORRESPONDANT**
VERFAHREN ZUR STEUERUNG EINER ÖLPUMPE ZUR VERBESSERUNG DER THERMISCHEN BEHAGLICHKEIT IM FAHRGASTRAUM EINES KRAFTFAHRZEUGS UND ZUGEHÖRIGES MOTORSTEUERUNGSSYSTEM
METHOD FOR CONTROLLING AN OIL PUMP IN ORDER TO IMPROVE THERMAL COMFORT IN THE PASSENGER COMPARTMENT OF A MOTOR VEHICLE, AND CORRESPONDING ENGINE MANAGEMENT SYSTEM

(30) Priorité: 10.12.2013 FR 1362330
(43) Date de publication de la demande: 19.10.2016
(73) Titulaire: PSA Automobiles SA, 78300 Poissy (FR)
(72) Inventeur: COFFY, Christophe, F-95130 Le Plessis Bouchard (FR); FUIN, Matthieu, F-92500 Rueil Malmaison (FR)
(86) Numéro de dépôt international: PCT/FR2014/053208
(87) Numéro de publication internationale: WO 2015/086972

(56) Documents cités:
- US-A- 5 339 776
- US-A1- 2011 253 092
- US-A1- 2013 179 049

## Description

La présente invention porte sur le domaine des moteurs thermiques comprenant une pompe à huile pilotée à cylindrée variable. Plus précisément, l'invention a pour objet un procédé de pilotage d'une telle pompe pour améliorer une prestation thermique dans l'habitacle d'un véhicule automobile, ainsi que sur le calculateur moteur correspondant.

Les moteurs thermiques comportent généralement une pompe à huile visant à limiter les frottements intrinsèques entre les pièces en mouvement du moteur et le couple hydraulique pour limiter les pertes mécaniques du moteur. A cet effet, la pompe à huile tourne en permanence pour alimenter en huile sous pression le vilebrequin ainsi que différents éléments en mouvement de ce moteur, afin de lubrifier et refroidir les paliers de guidage de ces éléments. Des valves de contrôle disposées dans le circuit d'huile, qui s'ouvrent sous une pression définie, permettent d'obtenir une certaine régulation du débit de fluide alimentant les différents composants.

Dans des conditions de température extérieure froide, l'énergie thermique produite par le moteur n'est pas toujours suffisante pour assurer la prestation thermique dans l'habitacle. Pour améliorer cette prestation thermique, le contrôle moteur possède une stratégie qui permet de dégrader le rendement de combustion du moteur thermique afin d'augmenter la température à l'intérieur de l'habitacle du véhicule. Toutefois, la mise en oeuvre de cette stratégie n'est pas toujours suffisante pour assurer un réchauffage rapide de l'habitacle du véhicule.

Les documents US20120143470 et FR2972488 enseignent de limiter la pression dans le circuit d'huile lorsque le moteur est froid. Toutefois, une telle commande de la pompe à huile engendre une dégradation de la prestation thermique dans l'habitacle. On connait encore les documents US5339776 et US2011253092 des procédés de pilotage d'une pompe à huile pilotée.

La présente invention vise au contraire à accélérer le réchauffage de l'habitacle en proposant un procédé de pilotage d'une pompe à huile pilotée à cylindrée variable destinée à alimenter en huile sous pression des éléments en mouvement d'un moteur thermique de véhicule automobile via un circuit d'huile, caractérisé en ce que ledit procédé comporte l'étape de faire fonctionner la pompe à huile dans un mode régulé mécaniquement de manière à maximiser une pression dans ledit circuit d'huile lorsqu'au moins une des conditions suivantes est vérifiée:
- une température extérieure est inférieure à un premier seuil calibrable et/ou une température dans un habitacle du véhicule est inférieure à un deuxième seuil calibrable et/ou
- une stratégie de dégradation d'un rendement de combustion du moteur thermique est activée pour augmenter la température à l'intérieur de l'habitacle.

L'invention permet ainsi d'augmenter les pertes thermiques produites par le moteur du fait de l'augmentation du couple de la pompe à huile et ainsi d'augmenter l'énergie thermique transférée dans l'échangeur thermique de l'habitacle. En outre, l'augmentation de la cylindrée de la pompe dans le mode régulé mécaniquement engendre l'ouverture des gicleurs et l'augmentation du débit d'huile, ce qui permet également de prélever de l'énergie au moteur pour la transmettre à l'huile. Cette énergie est donc récupérable à l'aérotherme de l'habitacle par l'intermédiaire de l'échangeur eau-huile. L'invention permet de gagner près de 4% d'énergie dans l'échangeur de l'habitacle dans la gamme thermique de l'habitacle.

Selon une mise en oeuvre, chacune des deux conditions est désactivable par calibration.

Selon une mise en oeuvre, ledit procédé comporte l'étape de faire fonctionner ladite pompe à huile dans un mode piloté lorsque la température dans l'habitacle devient supérieure au deuxième seuil calibrable ou suite à une désactivation de la stratégie de dégradation du rendement de combustion du moteur thermique. Cela permet de limiter la surconsommation du véhicule due à l'augmentation des pertes par frottement du moteur générée par le fonctionnement de la pompe à huile à cylindrée maximale.

Selon une mise en oeuvre, ledit procédé comporte l'étape de faire de nouveau fonctionner ladite pompe à huile dans un mode régulé mécaniquement lorsque la température dans l'habitacle passe sous un troisième seuil de température différent du deuxième seuil, de manière à avoir un fonctionnement en hystérésis.

Selon une mise en oeuvre, la pression maximale supportable par le circuit d'huile est de l'ordre de 9 bars.

L'invention a également pour objet un calculateur moteur comportant une mémoire stockant des instructions logicielles pour la mise en oeuvre du procédé de pilotage d'une pompe à huile pilotée à cylindrée variable selon l'invention.

L'invention sera mieux comprise à la lecture de la description qui suit et à l'examen des figures qui l'accompagnent. Ces figures ne sont données qu'à titre illustratif mais nullement limitatif de l'invention.
La figure 1 est une représentation schématique d'un circuit d'huile muni d'une pompe à huile pilotée à cylindrée variable mettant en oeuvre le procédé selon la présente invention;
La figure 2 représente les étapes principales du procédé de pilotage de la pompe à huile selon la présente invention en fonction des demandes thermiques de l'habitacle du véhicule.

Les éléments identiques, similaires, ou analogues conservent les mêmes références d'une figure à l'autre.

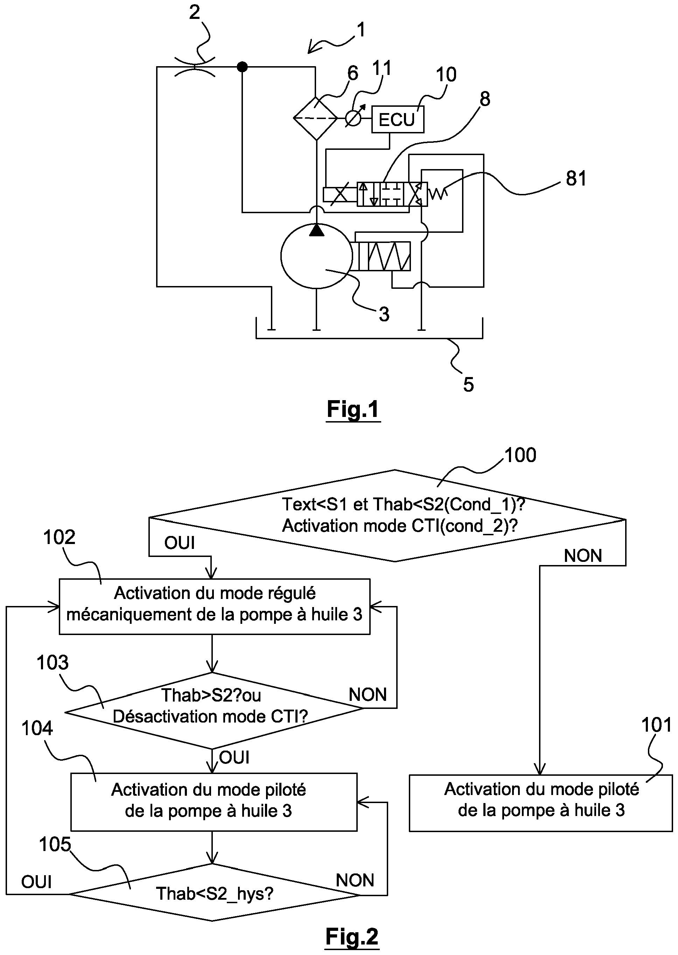

La figure 1 représente de manière schématique un circuit d'huile 1 pour l'alimentation d'un moteur thermique 2 comportant une pompe à huile 3 pilotée à cylindrée variable. Cette pompe 3 est destinée à aspirer par un tamis d'aspiration l'huile de lubrification contenue dans un carter 5 situé en dessous d'un bloc moteur dans lequel sont ménagés les cylindres.

L'huile sous pression passe ensuite dans un filtre à huile 6 pour être purifiée, puis est distribuée de manière à alimenter le bloc moteur pour lubrifier les paliers du vilebrequin et les bielles. L'huile alimente également la culasse pour lubrifier notamment les paliers de l'arbre à came ainsi que les poussoirs des soupapes.

La pression d'huile sortant du filtre à huile 6 est renvoyée par un conduit à une électrovanne 8 assurant une alimentation d'une chambre de pilotage de la pompe à huile 3. La pompe à huile 3 utilisée pourra être une pompe à engrenages ou une pompe à palettes ou une pompe à pendules à cylindrée variable.

La pompe à huile 3 peut fonctionner dans un mode dit "piloté" ou dans un mode dit "régulé mécaniquement". Dans le mode piloté, l'électrovanne 8 alimentée électriquement permet de modifier la cylindrée de la pompe 3. A cette fin, l'électrovanne 8 est commandée par le calculateur moteur 10 en fonction de la pression retournée par le capteur 11 associé. La pression dans le circuit d'huile 1 est alors maintenue dans une plage de pression, par exemple entre 1 et 6 bars, afin d'optimiser la consommation en carburant du véhicule.

Dans le mode régulé mécaniquement, l'électrovanne 8 n'est plus alimentée, et c'est le ressort de rappel 81 de l'électrovanne 8 qui permet de modifier mécaniquement la cylindrée de la pompe 3 en fonction de la température et de la viscosité de l'huile. Le ressort de rappel 81 est taré autour d'une pression maximale supportable par le circuit d'huile 1 située autour de 9 bars. Dans ce cas, soit la pompe 3 fonctionne à sa cylindrée maximum (si la pression résultante est inférieure à la pression maximale de 9 bars) soit la cylindrée de la pompe 3 est ajustée pour que la pompe 3 génère la pression maximale, ici de 9 bars, imposée par le ressort 81.

Dans le cas d'autres moteurs, on pourra utiliser un clapet taré autour d'une pression maximale permettant de ne pas dépasser la pression de 9 bars dans le circuit d'huile 1 du moteur thermique.

On décrit ci-après, en référence avec la figure 2, les différentes étapes du procédé de pilotage de la pompe à huile 3 selon la présente invention permettant d'améliorer la prestation thermique dans l'habitacle du véhicule.

Le calculateur 10 détecte au cours d'une étape 100 si l'une des deux conditions suivantes (Cond_1, Cond_2) est vérifiée:
- La température extérieure Text est inférieure à un premier seuil calibrable S1 et la température dans l'habitacle Thab est inférieure à un deuxième seuil calibrable S2 (Cond_1) ou
- le calculateur 10 active une stratégie de dégradation de la combustion, appelée stratégie CTI, pour améliorer la prestation thermique à l'intérieur de l'habitacle (Cond_2).

Chacune des deux conditions (Cond_2, Cond_1) est désactivable par calibration.

Dans le cas où aucune de ces conditions (Cond_1, Cond_2) n'est vérifiée, alors la pompe 3 est commandée par le calculateur 10 dans une étape 101 pour fonctionner de façon classique en mode piloté.

Dans le cas où une de ces deux conditions Cond_1 ou Cond_2 est vérifiée, la pompe 3 est commandée par le calculateur 10 dans une étape 102 pour fonctionner en mode régulé mécaniquement de manière à maximiser la pression dans le circuit d'huile 1.

On augmente ainsi les pertes thermiques produites par le moteur 1 du fait de l'augmentation du couple de la pompe à huile 3 et donc l'énergie thermique transférée dans l'échangeur de l'habitacle. En outre, l'augmentation de la cylindrée de la pompe 3 engendre l'ouverture des gicleurs et l'augmentation du débit d'huile, ce qui permet également de prélever de l'énergie au moteur pour l'envoyer à l'huile. Cette énergie est donc récupérable à l'aérotherme de l'habitacle par l'intermédiaire de l'échangeur eau-huile. L'invention permet de gagner près de 4% d'énergie dans l'échangeur de l'habitacle dans la gamme thermique de l'habitacle.

Le mode régulé mécaniquement est maintenu tant que la température dans l'habitacle Thab est inférieure au seuil S2 ou tant que la stratégie de dégradation du rendement de combustion du moteur est activée.

Dans une étape 103, le calculateur 10 vérifie si la température dans l'habitacle Thab dépasse le seuil S2 ou si la stratégie de dégradation du rendement du moteur thermique 2 est désactivée.

Une fois que la température dans l'habitacle Thab dépasse le seuil S2 et tant que cette température Thab ne repasse pas sous un seuil hystérésis calibrable S2_hys différent du seuil S2, le calculateur 10 arrête de faire fonctionner la pompe à huile 3 dans le mode régulé mécaniquement et enclenche l'activation du mode piloté (mode nominal) de la pompe à huile 3 dans une étape 104.

Si la température dans l'habitacle Thab repasse sous le seuil S2_hys (cf. étape 105), le mode régulé mécaniquement est de nouveau activé par le calculateur moteur 10. On a ainsi un fonctionnement en hystérésis du système.

## Revendications

1. Procédé de pilotage d'une pompe à huile (3) pilotée à cylindrée variable destinée à alimenter en huile sous pression des éléments en mouvement d'un moteur thermique (1) de véhicule automobile via un circuit d'huile (1), **caractérisé en ce qu'**il comporte l'étape de faire fonctionner la pompe à huile (3) dans un mode régulé mécaniquement de manière à maximiser une pression dans ledit circuit d'huile (1) lorsqu'au moins une des conditions suivantes est vérifiée:
- une température extérieure (Text) est inférieure à un premier seuil calibrable et une température dans un habitacle (Thab) du véhicule est inférieure à un deuxième seuil calibrable (Cond_1) ou
- une stratégie de dégradation d'un rendement de combustion du moteur thermique (1) est activée pour augmenter la température à l'intérieur de l'habitacle (Cond_2).

2. Procédé selon la revendication 1, **caractérisé en ce que** chacune des deux conditions (Cond_1, Cond_2) est désactivable par calibration.

3. Procédé selon la revendication 1 ou la revendication 2, **caractérisé en ce qu'**il comporte l'étape de faire fonctionner ladite pompe à huile (3) dans un mode piloté lorsque la température dans l'habitacle (Thab) devient supérieure au deuxième seuil calibrable (S2) ou suite à une désactivation de la stratégie de dégradation du rendement de combustion du moteur thermique (1).

4. Procédé selon la revendication 3, **caractérisé en ce qu'**il comporte l'étape de faire de nouveau fonctionner ladite pompe à huile (3) dans un mode régulé mécaniquement lorsque la température dans l'habitacle (Thab) passe sous un troisième seuil de température (S2_hys) différent du deuxième seuil (S2), de manière à avoir un fonctionnement en hystérésis.

5. Procédé selon l'une quelconque des revendications 1 à 4, **caractérisé en ce que** la pression maximale supportable par le circuit d'huile (1) est de l'ordre de 9 bars.

6. Calculateur moteur (10) comportant une mémoire stockant des instructions logicielles pour la mise en oeuvre du procédé de pilotage d'une pompe à huile (3) pilotée à cylindrée variable selon l'une quelconque des revendications précédentes.

## Patentansprüche

1. Verfahren zur Steuerung einer gesteuerten Ölpumpe (3) mit variablem Hubraum, die dazu bestimmt ist, Elemente in Bewegung eines Verbrennungsmotors (1) eines Kraftfahrzeugs über einen Ölkreislauf (1) mit Öl unter Druck zu versorgen, **dadurch gekennzeichnet, dass** es den Schritt umfasst, die Ölpumpe (3) in einem mechanisch geregelten Modus funktionieren zu lassen, um einen Druck in dem Ölkreislauf (1) zu maximieren, wenn mindestens eine der folgenden Bedingungen erfüllt ist:
- eine Außentemperatur (Text) ist niedriger als eine erste kalibrierbare Grenze, und eine Temperatur in einem Fahrgastraum (Thab) des Fahrzeugs ist niedriger als eine zweite kalibrierbare Grenze (Cond_1) oder
- eine Abbaustrategie einer Verbrennungsleistung des Verbrennungsmotors (1) wird aktiviert, um die Temperatur innerhalb des Fahrgastraums zu erhöhen (Cond_2).

2. Verfahren nach Anspruch 1, **dadurch gekennzeichnet, dass** jede der zwei Bedingungen (Cond_1, Cond_2) durch Kalibrieren deaktivierbar ist.

3. Verfahren nach Anspruch 1 oder Anspruch 2, **dadurch gekennzeichnet, dass** es den Schritt umfasst, die Ölpumpe (3) in einem gesteuerten Modus funktionieren zu lassen, wenn die Temperatur im Fahrgastraum (Thab) höher als die zweite kalibrierbare Grenze (S2) wird, oder nach einer Deaktivierung der Abbaustrategie der Verbrennungsleistung des Verbrennungsmotors (1).

4. Verfahren nach Anspruch 3, **dadurch gekennzeichnet, dass** es den Schritt umfasst, die Ölpumpe (3) wieder in einem mechanisch geregelten Modus funktionieren zu lassen, wenn die Temperatur im Fahrgastraum (Thab) unter eine dritte Temperaturgrenze (S2_hys), die sich von der zweiten Grenze (S2) unterscheidet, fällt, um eine Hysterese-Funktion zu erhalten.

5. Verfahren nach einem der Ansprüche 1 bis 4, **dadurch gekennzeichnet, dass** der maximal von dem Ölkreislauf (1) ertragbare Druck 9 bar beträgt.

6. Motorrechner (10), umfassend einen Speicher, der Softwareanweisungen für den Einsatz des Verfahrens zur Steuerung einer gesteuerten Ölpumpe (3) mit variablem Hubraum nach einem der vorhergehenden Ansprüche speichert.

## Claims

1. A method for controlling a controlled variable-stroke oil pump (3) intended to supply pressurized oil to the moving parts of a motor vehicle combustion engine (1) via an oil circuit (1), **characterized in that** it comprises the step of running the oil pump (3) in a mechanically regulated mode so as to maximize a pressure in said oil circuit (1) when at least one of the following conditions is met:
- an outside temperature (Text) is lower than a first calibratable threshold and a temperature in a passenger compartment (Thab) of the vehicle is lower than a second calibratable threshold (Cond_1) or
- a downgraded combustion output strategy of the combustion engine (1) is activated in order to raise the temperature inside the passenger compartment (Cond_2).

2. The method according to Claim 1, **characterized in that** each of the two conditions (Cond_1, Cond_2) is able to be deactivated by calibration.

3. The method according to Claim 1 or Claim 2, **characterized in that** it comprises the step of running said oil pump (3) in a controlled mode when the temperature on the passenger compartment (Thab) becomes greater than the second calibratable threshold (S2) or following a deactivation of the downgraded combustion output strategy of the combustion engine (1).

4. The method according to Claim 3, **characterized in that** it comprises the step of running said oil pump (3) again in a mechanically regulated mode when the temperature in the passenger compartment (Thab) passes below a third temperature threshold (S2_hys) which is different from the second threshold (S2), so as to have a hysteresis operation.

5. The method according to any one of Claims 1 to 4, **characterized in that** the maximum pressure which is able to be supported by the oil circuit (1) is in the order of 9 bars.

6. An engine management system (10) comprising a memory storing software instructions for the implementation of the method for controlling a controlled variable-stroke oil pump (3) according to any one of the preceding claims.
